# EUROPÄISCHE PATENTSCHRIFT

(11) **EP 2 205 883 B1**
(45) Veröffentlichungstag und Bekanntmachung des Hinweises auf die Patenterteilung: **06.11.2013**
(21) Anmeldenummer: 08801339.6
(22) Anmeldetag: 18.09.2008
(51) Int. Cl.: F16D 25/08

(54) **NEHMERZYLINDER UND AUSRÜCKSYSTEM**
SLAVE CYLINDER AND RELEASE SYSTEM
CYLINDRE RÉCEPTEUR ET SYSTÈME DE DÉBRAYAGE

(30) Priorität: 15.10.2007 DE 102007049254
(43) Veröffentlichungstag der Anmeldung: 14.07.2010
(73) Patentinhaber: Schaeffler Technologies AG & Co. KG, 91074 Herzogenaurach (DE)
(72) Erfinder: SCHOLZ, Peter, 76137 Karlsruhe (DE); RAMMHOFER, Thomas, 77880 Sasbach (DE); SESTER, Christof, 77723 Gengenbach (DE)
(86) Internationale Anmeldenummer: PCT/DE2008/001559
(87) Internationale Veröffentlichungsnummer: WO 2009/049581

(56) Entgegenhaltungen:
- EP-A- 0 310 570
- DE-A1- 3 907 030
- DE-A1- 19 742 468
- DE-A1- 19 800 232
- DE-U1- 20 315 735
- FR-A- 2 851 627
- FR-A- 2 896 287
- GB-A- 1 401 596
- US-A- 3 638 773
- US-A- 4 708 228
- US-A- 6 102 183

## Beschreibung

Die vorliegende Erfindung betrifft einen Nehmerzylinder, der insbesondere für ein hydraulisches System eines Kraftfahrzeuges als CSC ausgeführt ist, gemäß dem Oberbegriff des Patentanspruchs 1.

Konzentrisch zur Getriebeeingangswelle angeordnete hydraulische Nehmerzylinder, so genannte CSC, sind bekannt und in vielfältigen Ausführungen bereits in Fahrzeugen im Einsatz. Bei allen Ausführungen geht es dabei darum, einen innerhalb eines Arbeitsraumes axial bewegbaren als Ringkolben ausgeführten Arbeitskolben hydraulisch mit einer Kraft zur Betätigung einer Kupplung zu beaufschlagen, um diese beispielsweise zu trennen. Diese Kraft wird auf einen mit dem Kolben verbundenes Ausrücklager übertragen, dessen der Kupplung bzw. deren rotierenden Tellerfederzungen am nächsten angeordneter Ring mit diesem in Kontakt steht.

Bei diesen Ausführungen befindet sich der Druckraum in unmittelbarer Nähe des Ausrücklagers. Diese Nehmerzylinder sind dabei zwischen Kupplung und Getriebe, also außerhalb des Kupplungsraumes, angeordnet.

Bei geringen Platzverhältnissen zwischen Kupplung und Getriebe ist es weiterhin bekannt, die Betätigung für die Kupplung oder zumindest das mit den Tellerfederzungen in Wirkverbindung stehende Ausrücklager, mit in den Kupplungsraum zu integrieren, wobei der zugehörige Druckraum außerhalb der Kupplung angeordnet ist. Die Verbindung zwischen dem im Kupplungsraum, um die Getriebeeingangswelle angeordneten Ausrücklager und dem im Druckraum axial bewegbaren Kolben, wird dabei über ein Koppelelement, wie beispielsweise einer Betätigungsstange, hergestellt. Diese Betätigungsstange fungiert dabei, je nach eingesetzter Kupplung, als Zug- oder Druckstange.

Zur Erzeugung der zur Kupplungsbetätigung erforderlichen Kraft ist einerseits eine entsprechend große hydraulische Fläche erforderlich, von der die Größe des Druckraumes abhängig ist und andererseits die Abdichtung des Druckraumes zu dessen Umgebung von großer Bedeutung.

Ein Nehmerzylinder gemäß dem Oberbegriff des Patentanspruchs 1 ist aus der GB 1 401 596 bekannt.

Es ist Aufgabe der Erfindung, einen Nehmerzylinder der oben genannten Art zur Betätigung einer Kupplung zu schaffen, mit dem unter Beibehaltung der axialen Ausdehnung des Arbeitsraumes die Druckkraft für die Betätigung der Kupplung erhöht wird.

Erfindungsgemäß gelöst wird diese Aufgabe durch einen Nehmerzylinder gemäß Patentanspruch 1. Bevorzugte Ausführungsbeispiele sind in den abhängigen Ansprüchen dargelegt.

Danach besteht ein Nehmerzylinder, der insbesondere für ein hydraulisches System eines Kraftfahrzeuges als CSC ausgeführt ist, aus einem Gehäuse, in dem ein Kolben innerhalb eines Druckraumes zwischen zwei Endstellungen axial verschiebbar angeordnet ist, wobei der Druckraum durch ein Dichtelement abgedichtet wird. Der Kolben steht über eine Betätigungsstange mit einem Ausrücklager in Wirkverbindung, das mittels mindestens eines Energiespeichers eine Vorspannung erhält. Dadurch, dass der Druckraum mit zwei unterschiedliche Durchmesser aufweisenden dynamischen Dichtelementen abgedichtet wird und der mindestens eine Energiespeicher im Druckraum angeordnet ist, wird trotz der Beibehaltung der axialen Ausdehnung des Arbeitsraumes die Druckkraft für die Betätigung der Kupplung erhöht.

Dabei ist es vorteilhaft, den Energiespeicher als Druckfeder auszubilden, wobei sich das eine Ende dieser zylindrischen Druckfeder in einer Aufnahme und das andere an der Innenkontur des Gehäuses abstützt. Außerdem ist es für die Herstellung vorteilhaft, die Betätigungsstange als Zug- oder Druckstange auszubilden.

Außer einer zylindrischen Form kann die Druckfeder auch eine taillierte Form aufweisen.

Eine vorteilhafte Ausgestaltung der Erfindung sieht vor, dass sich der Kolben aus einem Kolbenboden und einem sich an diesen anschließenden Kolbenschaft zusammensetzt, wobei die Länge des Kolbens mindestens der des Druckraumes entspricht.

Weiter ist es vorteilhaft, dass der Kolben über seinen Kolbenschaft in einer im Gehäuse vorgesehenen Lagerbuchse und über die als Gleitfläche ausgebildete Mantelfläche des Kolbenbodens im Gehäuse geführt wird.

Zur formschlüssigen Aufnahme des Dichtelements mit dem größeren Durchmesser im Gehäuse weist dieses eine Wulst auf, über die es mit einer entsprechenden im Gehäuse vorgesehenen Nut verbunden ist.

Besonders vorteilhaft ist es, wenn eine Wegmesseinrichtung am Gehäuse des Nehmerzylinders oder in dessen unmittelbarer Nähe angeordnet ist und aus einem berührungslosen Sensor besteht, der mit dem ringförmigen Magnet in Wirkverbindung steht.

Zur Vermeidung von Verlusten der Kraftübertragung sind in vorteilhafter Weise die Enden von Kolben und Betätigungsstange miteinander verbindbar, wobei die Verbindung lösbar, wie beispielsweise mittels eine Schraubverbindung oder unlösbar, beispielsweise durch Kleben hergestellt wird.

Zum Verschließen des druckraumseitigen Gehäuses des Nehmerzylinders und damit des Druckraumes sowie zum Schutz vor Schmutzeintrag dient eine elastische, topfförmige Schutzkappe, deren zylindrischer Bereich zur Erhöhung der Elastizität während des Aufsetzens auf das Gehäuse in axialer Richtung über den Innenumfang verteilt mit Nuten versehen ist, sodass zwischen diesen Schlitzen Segmente stehen bleiben. Zur Bildung von Schnappsegmenten, die mit einer in das Gehäuse eingebrachten Nut verrasten, sind die Segmente nach innen hakenförmig ausgebildet.

Außerdem wird die Aufgabe mit einem Ausrücksystem mit den Merkmalen des Anspruchs 11 gelöst, bei dem ein Geberzylinder über eine Druckleitung mit einem ein Ausrücklager betätigenden erfindungsgemäßen Nehmerzylinder verbunden ist. Die Betätigung mindestens eines Ausrücklagers erfolgt vorteilhaft durch mindestens eine Getriebeeingangswelle hindurch.

Die Erfindung wird nachfolgend anhand eines Ausführungsbeispiels und zugehöriger Zeichnungen näher erläutert.

Es zeigen:
- Figur 1: eine Doppelkupplung mit Betätigungsvorrichtungen für jede Teilkupplung,
- Figur 2: eine Schnittdarstellung eines erfindungsgemäßen Nehmerzylinders ohne Ausrücklager.

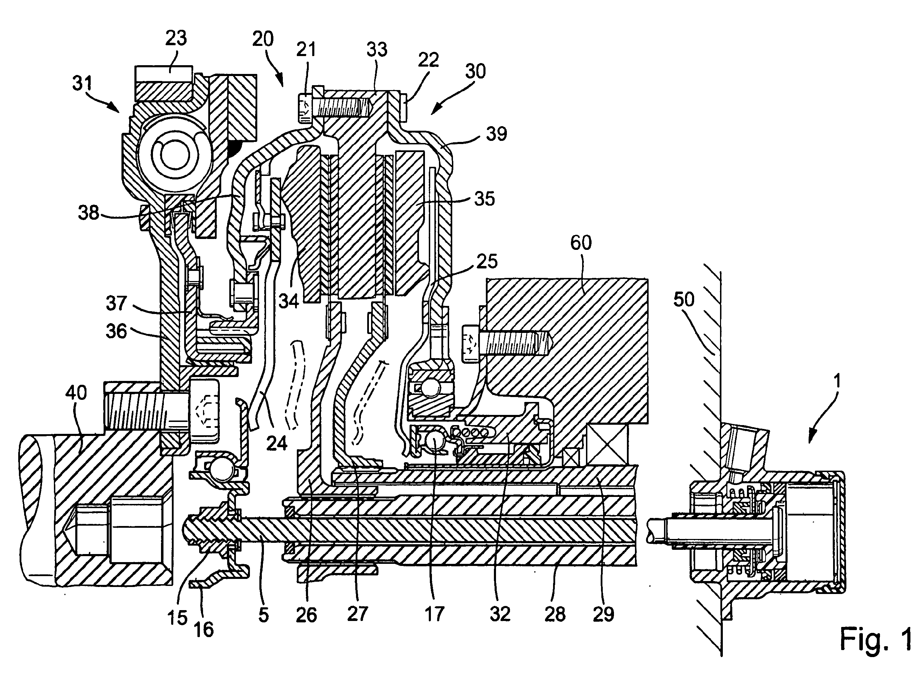

In Figur 1 ist ein Teil eines mit einer Doppelkupplung ausgeführten Antriebsstrangs eines Kraftfahrzeugs mit den entsprechenden Betätigungsvorrichtungen 1, 32 im Halbschnitt dargestellt, wobei die Doppelkupplung aus zwei Teilkupplungen, also einer ersten Teilkupplung 20 und einer zweiten Teilkupplung 30 gebildet wird. Jede Teilkupplung 20, 30 ist konzentrisch um eine zugehörige Getriebeeingangswelle 28, 29 angeordnet und steht mit einem der jeweiligen Teilkupplung 20, 30 zugeordneten Ausrücklager 16, 17 in Wirkverbindung. Jedes Ausrücklager 16, 17 wird hydraulisch von einer entsprechenden Betätigungsvorrichtung 1, 32 mit einer Betätigungskraft beaufschlagt. Ebenso wie die Betätigungsvorrichtung 32 wird die Betätigungsvorrichtung 1 von einem Nehmerzylinder gebildet, der ebenfalls konzentrisch zur zugehörigen Getriebeeingangswelle 28, 29 angeordnet ist. Figur 1 zeigt, dass es aus Gründen der Anpassung an eine Bauraumverringerung üblich ist, zumindest das der ersten Teilkupplung 20 zugeordnete Ausrücklager 16 mit im Kupplungsraum anzuordnen und den mit diesem verbundenen erfindungsgemäßen Nehmerzylinder 1 in einen Bauraum außerhalb des Zwischenraumes zwischen Doppelkupplung bzw. Kupplungsglocke 60 und einem Getriebe 50 zu verlegen.

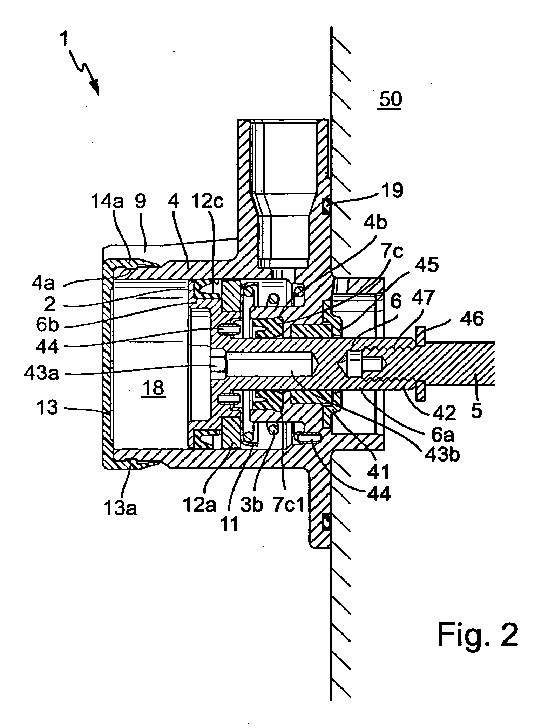

In Figur 2 ist der außerhalb des Kupplungsraumes angeordnete Teil des Nehmerzylinders 1 jeweils als Einzelteil dargestellt. Bei der weiteren Beschreibung der Figuren werden für gleiche Bauteile gleiche Bezugszeichen verwendet.

Die in Figur 1 dargestellte Doppelkupplung ist zwischen einer nicht dargestellten Antriebseinheit, insbesondere einer Brennkraftmaschine, von der eine Kurbelwelle 40 ausgeht, und dem Getriebe 50 angeordnet. Die Teilkupplung 30 stellt dabei eine zugedrückte Kupplung und die Teilkupplung 20 eine aufgedrückte Kupplung dar. Beide Teilkupplungen 20, 30 sind jeweils auf einer Seite einer zentralen Schwungmasse angeordnet, die gleichzeitig als Zwischendruckplatte 33 fungiert, so dass sich die Druckplatten 34, 35 beider Teilkupplungen 20, 30 gegenüber stehen.

Weiterhin geht aus dieser Figur 1 hervor, dass zwischen der Antriebseinheit und der Doppelkupplung ein externer Dämpfer 31 angeordnet ist. Die Kurbelwelle 40 der Brennkraftmaschine ist über Schraubverbindungen fest mit einem Eingangsteil 36 des Dämpfers 31 verbunden. Das Eingangsteil 36 des Dämpfers 31 hat dabei im Wesentlichen die Gestalt einer sich in radialer Richtung erstreckenden Kreisringscheibe, die radial außen einen Schwingungsdämpferkäfig bildet. Radial außen ist am Eingangsteil 36 ein Anlasserzahnkranz 23 aufgebracht. In dem Schwingungsdämpferkäfig ist mindestens eine Energiespeichereinrichtung, insbesondere eine Federeinrichtung, zumindest teilweise aufgenommen. In diese Federeinrichtung greift ein Ausgangsteil 37 des Dämpfers 31 ein.

Mit Hilfe von Schraubverbindungen 21, 22 sind die beiden Kupplungsdeckel 38, 39 der Kupplungen 20, 30 an der gemeinsamen Zwischendruckplatte 33 befestigt. Antriebsseitig sind zwischen einer mit der Kupplung 20 in Wirkverbindung stehender Druckplatte 34 und der Zwischendruckplatte 33 Reibbeläge einer ersten Kupplungsscheibe 26 einklemmbar. Diese erste Kupplungsscheibe 26 ist über ein Nabenteil drehfest mit der ersten Getriebeeingangswelle 28 verbunden, die als Hohlwelle ausgeführt ist. Die erste Getriebeeingangswelle 28 ist drehbar in der zweiten, ebenfalls als Hohlwelle ausgebildeten Getriebeeingangswelle 29 angeordnet. Ein Nabenteil einer zweiten Kupplungsscheibe 27 ist drehfest mit dem antriebsseitigen Ende der zweiten Getriebeeingangswelle 29 verbunden. An der zweiten Kupplungsscheibe 27 der Kupplung 30 sind radial außen Reibbeläge befestigt, die zwischen der Zwischendruckplatte 33 und der mit der Kupplung 30 in Wirkverbindung stehenden Druckplatte 35 einklemmbar sind. Die erste Getriebeeingangswelle 28 wird bei Verwendung dieser Art von Teilkupplungen von einer Zugstange 5 durchzogen, so dass diese im Zentrum beider Getriebeeingangswellen 28, 29 gelagert und geführt ist.

Die aus den beiden Teilkupplungen 20, 30 bestehende Doppelkupplung wird über die konzentrisch um die Getriebeeingangswellen 28, 29 angeordneten Nehmerzylinder 1, 32 mit den entsprechend zugehörigen Ausrücklagern 16, 17 betätigt. Diese Ausrücklager 16, 17 wirken wiederum mit Betätigungshebeln 24, 25 zusammen. Bei den Betätigungshebeln 24, 25 handelt es sich einerseits um eine Tellerfeder 24 und andererseits um eine Hebelfeder 25. Mittels dieser sind die beiden Druckplatten 34, 35 in axialer Richtung relativ zur Zwischendruckplatte 33 begrenzt verlagerbar. Die Ausrücklager 16, 17 werden hydraulisch mit Druck beaufschlagt. Die Zugstange 5 dient hierbei zur Betätigung des Ausrücklagers 16, das auf dieser endseitig im Kupplungsraum angeordnet ist. Die axiale Betätigung der Zugstange 5 erfolgt über den außerhalb des Kupplungsraumes angeordneten Nehmerzylinder 1. Auf diese Weise wird der Bauraum zwischen Doppelkupplung und Getriebe 50 verringert. Das in den Kupplungsraum hinein ragende Ende der Zugstange 5 ist mit einem Gewinde versehen, so dass mittels einer Mutter 15 das Ausrücklager 16 auf dieser fixiert werden kann. Über einen in radialer Richtung entsprechend ausgebildeten Fortsatz des Lageraußenringes steht das Ausrücklager 16 mit der Tellerfeder 24 in Wirkverbindung. Im Gegensatz dazu ist in diesem Beispiel der Lagerinnenring des Betätigungslagers 17 so gestaltet, dass dieser eine Wirkverbindung mit der Hebelfeder 25 eingehen kann. Die Betätigung des Ausrücklagers 17 erfolgt durch eine axiale Bewegung des im Gehäuse des Nehmerzylinders 32 gelagerten Kolbens, der hydraulisch mit einer Druckkraft beaufschlagbar ist. Das Ausrücklager 17 dieses Nehmerzylinders 32 ist platzoptimiert fluchtend zu dem im abtriebsseitigen Kupplungsdeckel 39 angeordneten Festlager eingesetzt.

Figur 2 zeigt den erfindungsgemäßen Nehmerzylinder 1 im Schnitt. Im Gehäuse dieses Nehmerzylinders 1 ist ein Kolben 6 axial bewegbar angeordnet. Dieser besteht aus einem Kolbenboden 6b mit einem an dem Innendurchmesser des Zylindergehäuses angepassten Durchmesser, an den sich ein lang gezogener Kolbenschaft 6a mit deutlich kleinerem Durchmesser anschließt. Über die Mantelfläche des Kolbenbodens 6b ist der Kolben 6 im Gehäuse 4 geführt, so dass diese als Gleitfläche 12c fungiert. Zwischen der Stirnfläche des Kolbenbodens 6b und dem durch eine Schutzkappe 13 abgeschlossenen Zylinderraum wird ein Druckraum 18 gebildet. Mit Hilfe eines in den Kolbenboden 6b integrierten Dichtelements 2 wird dieser Druckraum 18 in radialer Richtung und damit die Gleitfläche 12c während der Bewegung des Kolbens 6 zur Umgebung hin abgedichtet. Für dieses dynamische Dichtelement 2 wird vorzugsweise ein Lippendichtring verwendet: Außer der axialen Fixierung dieses Dichtelements 2 dient ein auf einer Abstufung des Kolbenbodens 6b angeordneter ringförmiger Magnet 12a zur Ermittlung der Position bzw. der Hublänge des Kolbens 6. Axial wird dieser Magnet 12a mittels einer als Ring ausgebildeten, becherförmigen Aufnahme 11 positioniert, die mit Hilfe mindestens eines, vorzugsweise in der Nähe ihres Innendurchmessers angeordneten, als Verdrehsicherung ausgebildeten Stiftes 44, zusätzlich radial fixiert wird.

Zur Kupplungsseite hin wird das Gehäuse 4 mittels einer Schutzkappe 13 verschlossen, die dieses vor Schmutzeinwirkung bewahrt.

In dieser Figur, in der der mittels einer unmittelbar im Durchgang des Kolbens 6 durch das Gehäuse 4 eingesetzten Lagerbuchse 41 auf seinem Schaft 6a zusätzlich geführte Kolben 6 eine seiner beiden Endstellungen einnimmt, ist erkennbar, dass dessen Weg auf dieser Seite durch einen Anschlag begrenzt wird. Diese Begrenzung wird mittels der entsprechend ausgebildete Innenkontur des Gehäuses 4 realisiert. Die Lagerbuchse 41 wird dabei mittels einer im Gehäuse 4 verankerten Anschlagscheibe 45 axial fixiert. Die Wegbegrenzung in der anderen Richtung erfolgt über eine in die Zugstange 5 eingesetzte Anschlagsscheibe 46, die mit ihrer Stirnfläche in dieser Stellung des Kolbens 6 an der im Gehäuse 4 verankerten Anschlagsscheibe 45 anschlägt.

Die bereits erwähnte Schutzkappe 13 besteht vorzugsweise aus elastischem Material und ist topfförmig ausgestaltet, wobei der zylinderförmige Teil der Schutzkappe 13 mit bis zu deren Boden reichenden Nuten 13b versehen ist, so dass im Innern des zylinderförmigen Teiles über den Umfang verteilte Segmente entstehen. Diese Segmente sind im Endbereich mit nach innen gerichteten Erhebungen versehen. Diese Erhebungen fungieren beim Aufsetzen der Schutzkappe 13 auf das Gehäuse 4 als Schnappsegmente 13a, da sie dabei zunächst radial aufgeweitet werden, um nach dem Anschlagen des Bodens der Schutzkappe 13 an das Gehäuse 4 in eine in dieses eingebrachte umlaufende Nut 4a zurückschnappen zu können.

In dieser gezeigten Stellung des Kolbens 6 ist der Druckraum 18 sehr gut erkennbar. Dieser wird außer vom bewegten dynamischen Dichtelement 2 noch von einem im Bereich des Durchlasses der Zugstange 5 durch das Gehäuse 4 in dieses eingesetzte stehenden dynamischen Dichtelement 7c abgedichtet. Dieses vorzugsweise ebenfalls als Lippendichtring ausgebildete Dichtelement 7c ist am Umfang mit einer Wulst 7c1 versehen, über die es in einer im Gehäuse 4 eingebrachten Nut 4a axial in diesem fixiert ist.

Die hydraulische Abdichtung des Nehmerzylinders 1 und damit des Druckraumes 18 erfolgt somit über die Länge des Kolbens 6 und weiter über das Dichtelement 2, und zusätzlich über das in das Gehäuse 4 eingesetzte Dichtelement 7c, das zur Abdichtung des Kolbenschafts 6a dient. Somit wird der Druckraum 18 vom Kolben 6, den Dichtelementen 2 und 7c sowie vom Gehäuse 4 umschlossen, wobei die Länge des Kolbens 6 mindestens der axialen Ausdehnung des Druckraumes 18 entspricht.

Um eine möglichst hohe Betätigungskraft für das Ausrücklager 16 in Figur 1 mit dem Kolben 6 mit einem vorgegebenen hydraulischen Druck zu erzielen, muss die dafür benötigte hydraulische Fläche des Druckraumes 18 so groß wie möglich sein. Diese hydraulische Fläche ergibt sich aus der Differenz der Dichtflächen der beiden Dichtungen 2 und 7c. Aus diesem Grunde werden in diesem erfindungsgemäßen Nehmerzylinder 1 zwei Dichtelemente unterschiedlichen Durchmessers zur Abdichtung des Druckraumes 18, anstatt eines einzigen Dichtelementes verwendet, wobei das Dichtelement 2 einen großen Durchmesser und das Dichtelement 7c einen kleineren Durchmesser aufweist. Die Abdichtung des Nehmerzylinders 1 gegenüber dem Getriebe 50, bzw. dem Getrieberaum, in dem sich Getriebeöl unter Atmosphärendruck befindet, wird in diesem Ausführungsbeispiel mittels einer als O-Ring ausgeführten Dichtung 19 realisiert, die in die Anlagefläche des Gehäuses 4 zum Getriebe 50 eingesetzt ist.

Wie aus Figur 2 ersichtlich, ist im Druckraum 18 ein Energiespeicher 3b konzentrisch zum Kolbenschaft 6a angeordnet. Dieser Energiespeicher 3b, der in diesem Beispiel als taillierte Druckfeder ausgebildet ist, stützt sich mit dem einen Ende an der becherförmigen Aufnahme 11 ab, mit der es gleichzeitig verbunden ist. Damit ist der Energiespeicher 3b über diese Aufnahme 11 verdrehgesichert, wodurch die vom Ausrücklager 16 herrührenden Schleppmomente abgestützt werden können. Mit ihrem anderen Ende stützt sie sich an der Innenkontur des Gehäuses 4 ab. Dieser unmittelbar in den Druckraum 18 eingebrachte Energiespeicher 3b dient bekanntermaßen zur Übertragung einer auf das Ausrücklager 16 aufzubringenden Vorspannkraft. Durch diese konstruktive Maßnahme wird der erforderliche Bauraum erheblich verkürzt.

Zur Ermittlung der jeweiligen Kolbenposition innerhalb des Kolbenhubes, dient einerseits der im Kolben 6 integrierte bzw. der an diesen angebundene Magnet 12a und andererseits eine als berührungsloser Sensor ausgebildete Wegmesseinrichtung 9. Diese ist außerhalb des Gehäuses 4 angeordnet. Vorteilhafterweise wird als Magnet 12a ein Dauermagnet eingesetzt. Allerdings ist auch eine lokale Magnetisierung des Kolbenmaterials oder eine Scheibe mit einem magnetischen bzw. magnetisierbaren Bereich anstelle des Magneten 12a denkbar.

Die Größe des Kolbenhubes wird durch seine beiden Anschläge bestimmt. Bei der Bewegung des Kolbens 6, d. h. während des Kolbenhubes, wird zwischen der Schutzkappe 13 und dem Raum bis zum Kolbenboden 6b die darin befindliche Luft komprimiert, die als Puffer wirkend, den vorgegebenen Kolbenhub verkürzt und damit den Ausrückvorgang ungünstig beeinflusst. Aus diesem Grunde übernehmen die Schnappsegmente 13a der Schutzkappe 13 gleichzeitig durch die Möglichkeit ihrer radialen Abspreizung eine Ventilfunktion.

Wie bereits erwähnt, ist das in Figur 1 dargestellte Ausrücklager 16 über die Zugstange 5 mit dem Kolben 6 verbunden. Diese Verbindung wird, wie in Figur 2 dargestellt, beispielsweise mittels einer Schraubverbindung realisiert, über die die Enden von Kolben 6 und Zugstange 5 miteinander verbunden sind. Zur Unterstützung des Anzugsmomentes während des Schraubvorganges ist in das Zentrum der Stirnfläche des Kolbenbodens 6b eine Aussparung in Form eines Sechskantes 43a eingeprägt, an die sich ein Sackloch 43b anschließt, um ein entsprechenden Werkzeuges aufnehmen zu können. Andere Verbindungen, sowohl lösbare als auch unlösbare, sind ebenfalls denkbar. So kann als lösbare Verbindung beispielsweise auch eine Bajonettverbindung oder eine einfache Bolzen-Bohrung-Verbindung gewählt werden, die mittels eines diese radial durchdringenden Stiftes diese Verbindung axial und radial fixiert. Eine unlösbare Verbindung könnte beispielsweise durch Kleben oder bei entsprechender Werkstoffwahl mittels Reibschweißen hergestellt werden. Die Wahl der Verbindung richtet sich dabei nach den entsprechend den Bauraumverhältnissen anzupassenden Abmessungen der beiden Bauteile, sowie deren Materialien und den an der Verbindungsstelle zu erwartenden auftretenden Kräften.

### Bezugszeichenliste

- 1: Nehmerzylinder / Betätigungsvorrichtung
- 2: Dichtelement
- 3b: Energiespeicher
- 4: Gehäuse
- 4a: Nut
- 4b: Nut
- 5: Zugstange
- 6: Kolben
- 6a: Kolbenstange
- 6b: Kolbenboden
- 7c: Dichtelement
- 7c1: Wulst
- 9: Wegmesseinrichtung / Sensor
- 11: ringförmige Aufnahme
- 12a: Magnet / magnetisierter Bereich
- 12c: Gleitfläche
- 13: Schutzkappe
- 13a: Schnappsegment
- 13b: Nut
- 15: Mutter
- 16: Betätigungslager / Ausrücklager für erste Teilkupplung
- 17: Betätigungslager / Ausrücklager für zweite Teilkupplung
- 18: Druckraum
- 19: Dichtung
- 20: erste Teilkupplung (gezogne Kupplung)
- 21: Schraubverbindung
- 22: Schraubverbindung
- 23: Anlasserzahnkranz
- 24: Tellerfeder / Betätigungshebel
- 25: Tellerfeder / Betätigungshebel
- 26: erste Kupplungsscheibe
- 27: zweite Kupplungsscheibe
- 28: erste Getriebeeingangswelle
- 29: zweite Getriebeeingangswelle
- 30: zweite Teilkupplung (gedrückte Kupplung)
- 31: Dämpfungseinrichtung
- 32: Nehmerzylinder / Betätigungsvorrichtung
- 33: zentrale Schwungmasse / Zwischendruckplatte
- 34: Druckplatte
- 35: Druckplatte
- 36: Eingangsteil
- 37: Ausgangsteil
- 38: Kupplungsdeckel
- 39: Kupplungsdeckel
- 40: Kurbelwelle
- 41: Lagerbuchse
- 42: Gewinde
- 43a: Sechskant
- 43b: Sackloch
- 44: Verdrehsicherung / Stift
- 45: Anschlagscheibe
- 46: Anschlagscheibe
- 47: Schraubverbindung
- 50: Getriebe
- 60: Kupplungsglocke

## Patentansprüche

1. Nehmerzylinder (1), der insbesondere für ein hydraulisches System eines Kraftfahrzeuges als CSC ausgeführt ist, mit einem Gehäuse (4), in dem ein Kolben (6) innerhalb eines Druckraumes (18) zwischen zwei Endstellungen axial verschiebbar angeordnet ist, wobei der Druckraum (18) durch zwei unterschiedliche Durchmesser aufweisende Dichtelemente (2, 7c) abgedichtet ist, und der Kolben (6) über eine Betätigungsstange (5) mit einem Ausrücklager (16) in Wirkverbindung steht, das mittels mindestens eines Energiespeichers (3b), der im Druckraum (18) angeordnet ist, eine Vorspannung erhält, **dadurch gekennzeichnet, dass** das Dichtelement (2), das den größeren Durchmesser aufweist, durch einen ringförmigen Magnet (12a), der zur Ermittlung einer Position oder Hublänge des Kolbens (6) vorgesehen ist, axial fixiert ist.

2. Nehmerzylinder (1) nach Anspruch 1, **dadurch gekennzeichnet, dass** der Energiespeicher (3b) als zylindrische Druckfeder ausgeführt ist, deren Endwindungen sich in einer Aufnahme (11) und an der Innenkontur des Gehäuses (4) abstützen.

3. Nehmerzylinder (1) nach Anspruch 1 oder 2, **dadurch gekennzeichnet, dass** sich der Kolben (6) aus einem Kolbenboden (6b) und einem sich an diesen anschließenden Kolbenschaft (6a) zusammensetzt.

4. Nehmerzylinder (1) nach Anspruch 3, **dadurch gekennzeichnet, dass** der Kolben (6) über seinen Kolbenschaft (6a) in einer im Gehäuse (4) vorgesehenen Lagerbuchse (41) geführt ist.

5. Nehmerzylinder (1) nach Anspruch 3 oder 4, **dadurch gekennzeichnet, dass** der ringförmige Magnet (12a) in den Kolbenboden (6b) integriert ist.

6. Nehmerzylinder (1) nach einem der Ansprüche 1 bis 5, **dadurch gekennzeichnet, dass** die Enden von Kolben (6) und Betätigungsstange (5) miteinander verbindbar sind.

7. Nehmerzylinder (1) nach einem der Ansprüche 1 bis 6, **dadurch gekennzeichnet, dass** das Gehäuse (4) mittels einer elastischen, topfförmigen Schutzkappe (13) abgedichtet ist.

8. Nehmerzylinder (1) nach Anspruch 7, **dadurch gekennzeichnet, dass** der zylindrische Bereich der topfförmigen Schutzkappe (13) in axialer Richtung über den Innenumfang verteilt mit Nuten (13b) versehen ist.

9. Nehmerzylinder (1) nach Anspruch 8, **dadurch gekennzeichnet, dass** zur Bildung von Schnappsegmenten (13a) die zwichen den Nuten vorhandenen Segmente nach innen hakenförmig ausgebildet sind.

10. Nehmerzylinder (1) nach Anspruch 9, **dadurch gekennzeichnet, dass** die Schnappsegmente (13a) mit einer in das Gehäuse (4) eingebrachten Nut (4a) korrespondieren.

11. Ausrücksystem mit einem Geberzylinder und einem ein Ausrücklager (16, 17) betätigenden Nehmerzylinder (1) nach einem der Ansprüche 1 bis 10, wobei der Geberzylinder und der Nehmerzylinder (1) über eine Druckleitung miteinander verbunden sind.

12. Ausrücksystem nach Anspruch 11, wobei die Betätigung mindestens eines Ausrücklagers (16, 17) durch mindestens eine Getriebeeingangswelle hindurch (28, 29) erfolgt.

## Claims

1. Slave cylinder (1), which is designed as CSC particularly for a hydraulic system of a motor vehicle, having a housing (4) in which a piston (6) is arranged axially displaceably between two end positions within a pressure space (18), the pressure space (18) being sealed off by means of two sealing elements (2, 7c) having different diameters, and the piston (6) being operatively connected via an actuating rod (5) to a release bearing (16) which acquires prestress by means of at least one energy accumulator (3b) arranged in the pressure space (18) **characterized in that** the sealing element (2) which has the larger diameter is fixed axially by means of a ring-shaped magnet (12a) provided for determining a position or stroke length of the piston (6).

2. Slave cylinder (1) according to Claim 1, **characterized in that** the energy accumulator (3b) is designed as a cylindrical compression spring, the end turns of which are supported in a receptacle (11) and on the inner contour of the housing (4).

3. Slave cylinder (1) according to Claim 1 or 2, **characterized in that** the piston (6) is composed of a piston head (6b) and of a piston shank (6a) adjoining the latter.

4. Slave cylinder (1) according to Claim 3, **characterized in that** the piston (6) is guided via its piston shank (6a) in a bearing brush (41) provided in the housing (4).

5. Slave cylinder (1) according to Claim 3 or 4, **characterized in that** the ring-shaped magnet (12a) is integrated into the piston head (6b).

6. Slave cylinder (1) according to one of Claims 1 to 5, **characterized in that** the ends of the piston (6) and of the actuating rod (5) are connectable to one another.

7. Slave cylinder (1) according to one of Claims 1 to 6, **characterized in that** the housing (4) is sealed off by means of an elastic pot-shaped protective cap (13).

8. Slave cylinder (1) according to Claim 7, **characterized in that** the cylindrical region of the pot-shaped protective cap (13) is provided with grooves (13b) distributed in the axial direction over the inner circumference.

9. Slave cylinder (1) according to Claim 8, **characterized in that**, for the formation of snap segments (13a), the segments present between the grooves are of inwardly hook-shaped design.

10. Slave cylinder (1) according to Claim 9, **characterized in that** the snap segments (13a) latch with a groove (4a) introduced into the housing (4).

11. Release system with a master cylinder and with a slave cylinder (1) which actuates a release bearing (16, 17) according to one of Claims 1 to 10, the master cylinder and the slave cylinder (1) being connected to one another via a pressure line.

12. Release system according to Claim 11, with the actuation of at least one release bearing (16, 17) taking place through at least one transmission input shaft (28, 29).

## Revendications

1. Cylindre récepteur (1), réalisé notamment pour un système hydraulique d'un véhicule automobile en tant que CSC, comprenant un boîtier (4) dans lequel un piston (6) est disposé de manière déplaçable axialement à l'intérieur d'un espace de pression (18) entre deux positions de fin de course, l'espace de pression (18) étant étanchéifié par deux éléments d'étanchéité (2, 7c) présentant des diamètres différents, et le piston (6) étant en liaison fonctionnelle par le biais d'une tige d'actionnement (5) avec un palier de débrayage (16), qui subit une précontrainte au moyen d'au moins un accumulateur d'énergie (3b) disposé dans l'espace de pression (18), **caractérisé en ce que** l'élément d'étanchéité (2) qui présente le plus grand diamètre est fixé axialement par un aimant annulaire (12a) qui est prévu pour déterminer une position ou une longueur de course du piston (6).

2. Cylindre récepteur (1) selon la revendication 1, **caractérisé en ce que** l'accumulateur d'énergie (3b) est réalisé sous forme de ressort de pression cylindrique dont les enroulements terminaux s'appuient dans un logement (11) et contre le contour interne du boîtier (4).

3. Cylindre récepteur (1) selon la revendication 1 ou 2, **caractérisé en ce que** le piston (6) se compose d'un fond de piston (6b) et d'une tige de piston (6a) s'y raccordant.

4. Cylindre récepteur (1) selon la revendication 3, **caractérisé en ce que** le piston (6) est guidé sur sa tige de piston (6a) dans une douille palier (41) prévue dans le boîtier (4).

5. Cylindre récepteur (1) selon la revendication 3 ou 4, **caractérisé en ce que** l'aimant annulaire (12a) est intégré dans le fond de piston (6b).

6. Cylindre récepteur (1) selon l'une quelconque des revendications 1 à 5, **caractérisé en ce que** les extrémités du piston (6) et de la tige d'actionnement (5) peuvent être connectées l'une à l'autre.

7. Cylindre récepteur (1) selon l'une quelconque des revendications 1 à 6, **caractérisé en ce que** le boîtier (4) est étanchéifié au moyen d'un capot de protection (13) élastique en forme de pot.

8. Cylindre récepteur (1) selon la revendication 7, **caractérisé en ce que** la région cylindrique du capot de protection en forme de pot (13) est pourvue de rainures (13b) réparties dans la direction axiale sur la périphérie interne.

9. Cylindre récepteur (1) selon la revendication 8, **caractérisé en ce que** pour former des segments encliquetables (13a), les segments prévus entre les rainures sont réalisés en forme de crochets vers l'intérieur.

10. Cylindre récepteur (1) selon la revendication 9, **caractérisé en ce que** les segments encliquetables (13a) correspondent à une rainure (4a) pratiquée dans le boîtier (4).

11. Système de débrayage comprenant un maître-cylindre et un cylindre récepteur (1) actionnant un palier de débrayage (16, 17) selon l'une quelconque des revendications 1 à 10, dans lequel le maître-cylindre et le cylindre récepteur (1) sont connectés l'un à l'autre par le biais d'une conduite de pression.

12. Système de débrayage selon la revendication 11, dans lequel l'actionnement d'au moins un palier de débrayage (16, 17) s'effectue à travers au moins un arbre d'entrée de boîte de vitesses (28, 29).
